# EUROPEAN PATENT APPLICATION

(11) **EP 4 796 987 A1**
(43) Date of publication of application: **26.08.2026**
(21) Application number: 25824412.8
(22) Date of filing: 19.02.2025
(51) Int. Cl.: G02F 1/125, G02B 6/02

(54) **MULTI-CORE OPTICAL FIBER AND ACOUSTO-OPTIC MODULATION DEVICE**

(30) Priority: 26.06.2024 CN 202410831725
(71) Applicant: Zhongtian Technology Advanced Materials Co., Ltd., Jiangsu 226000 (CN); Fudan University, Shanghai 200082 (CN); Jiangsu Zhongtian Technology Co., Ltd., Nantong, Jiangsu 226463 (CN)
(72) Inventor: QIN, Yu, Nantong, Jiangsu 226010 (CN); ZHANG, Zelin, Nantong, Jiangsu 226010 (CN); XIAO, Limin, Nantong, Jiangsu 226010 (CN); SHEN, Yichun, Nantong, Jiangsu 226010 (CN); JIANG, Xinli, Nantong, Jiangsu 226010 (CN)
(74) Representative: Lanchava, Bakuri
(86) International application number: PCT/CN2025/078062
(87) International publication number: WO 2026/001017

(57) **Abstract**

A multi-core optical fiber and an acousto-optic modulation device. The multi-core optical fiber comprises: an acoustic-excitation core, a plurality of outer cores, a trench layer, and a cladding; the acoustic-excitation core is located at the circle center position of the cladding, and the distances between the acoustic-excitation core and the plurality of outer cores are equal; the trench layer is arranged on the outer side of the acoustic-excitation core; and the plurality of outer cores have the same core spacing and are annularly arranged around the acoustic-excitation core. By using the acoustic-excitation core, the multi-core optical fiber can simultaneously modulate a plurality of light-guiding cores within the cladding, achieving consistent modulation effects.

## Description

### Technical Field

The present application relates to technical field of optical fiber, particularly relates to a multi-core optical fiber and an acousto-optic modulation device.

### Background Art

With rapid development of optical fiber communication technology, the multi-core optical fibers have shown great application potential in fields such as high-speed data communication, an optical fiber ISAC (Integrated Sensing and Communication) system due to their unique transmission advantages. However, the existing optical-fiber acousto-optic modulation technology is limited by the acoustic response frequency of acousto-optic crystals, it is difficult for the modulation bandwidth to exceed 400 MHz, and the needs for high speed and high capacity data transmission cannot be met.

In the prior art, the structure of multi-core optical fiber typically includes a plurality of fiber cores and a common cladding region. Although each fiber core has independent transmission capability, only the acousto-optic modulation of a single fiber core can be achieved due to the limitations of existing acousto-optic modulation technology. In order to achieve the modulation of each fiber core in the multi-core optical fiber, it is necessary to use plenty of acousto-optic modulators and fan-in fan-out (FIFO) devices, to equip each fiber core with an independent acousto-optic modulator and a FIFO device for individually processing each fiber core.

However, the above-mentioned multi-core optical fibers have complex structures, high costs, and have the problem of each fiber core having inconsistent modulation effect, which affects the overall transmission quality.

### Summary of the Invention

The present application provides a multi-core optical fiber and an acousto-optic modulation device for solving the problem of poor acousto-optic modulation effects of the multi-core optical fibers in the prior art.

In a first aspect, the present application provides a multi-core optical fiber comprising an acoustic-excited fiber core, a plurality of outer fiber cores, a channel layer, and a cladding layer;
The acoustic-excited fiber core is located at the center of the cladding layer, and the acoustic-excited fiber core is equidistant from the plurality of outer fiber cores;
The channel layer is arranged on the outer side of the acoustic-excited fiber core;
The plurality of outer fiber cores have identical inter-core spacing therebetween and are annularly arranged about the acoustic-excited fiber core.

In a possible design, the acoustic-excited fiber core has a mode field area of a preset threshold, and the preset threshold ranges from ≥ 4 µm² to ≤ 40 µm².

In a possible design, the channel layer is a double-layer channel layer.

In a possible design, the mode field area of the acoustic-excited fiber core at a wavelength of 1,550 nm is less than or equal to 15 µm².

In a possible design, the mode field area of the acoustic-excited fiber core is greater than or equal to 5 µm².

In a possible design, the number of outer fiber cores is 3, 4, 6, or 8.

In a second aspect, the present application provides an acousto-optic modulation device, comprising the multi-core optical fiber according to the first aspect and any embodiments of the first aspect;
The multi-core optical fiber is used for acousto-optic modulation on a target optical fiber;
The target optical fiber comprises a plurality of fiber cores and a cladding layer;
The plurality of fiber cores of the target optical fiber are consistent in number and position arrangement with the plurality of outer fiber cores of the multi-core optical fiber, and there is no fiber core in the center position of the cladding layer of the target optical fiber.

In a possible design, the device further comprises: a fan-in device, a fan-out device, and a pump light wave terminal;
The fan-in device and the fan-out device are configured to connect the multi-core optical fiber with the target optical fiber;
The pump light wave terminal is connected to the acoustic-excited fiber core for emitting pump light towards the acoustic-excited fiber core.

In a possible design, the pump light wave terminal is sequentially connected to a light source, a phase modulator, and an opto-isolator, the phase modulator is also connected to a microwave signal source and the opto-isolator is connected to the acoustic-excited fiber core.

In a possible design, the fan-in device comprises a first fan-in device and a second fan-in device, and the fan-out device comprises a first fan-out device and a second fan-out device;
Both the passages of the first fan-out device and the passages of the second fan-in device are arranged in correspondence to the plurality of fiber cores of the target optical fiber;
Both the passages of the first fan-in device and the passages of the second fan-out device are arranged in correspondence to fiber cores of the multi-core optical fiber;
The first fan-out device is configured to receive an optical signal transmitted by the target optical fiber, and the optical signal is transmitted to the multi-core optical fiber through the first fan-in device;
The second fan-out device is configured to receive the optical signal acousto-optically modulated by the multi-core optical fiber, and the optical signal is transmitted to the target optical fiber through the second fan-in device.

In a possible design, the first fan-in device has a plurality of outer passages for connecting the passages of the first fan-out device and the plurality of outer fiber cores of the multi-core optical fiber;
The second fan-out device has a plurality of outer passages for connecting the plurality of outer fiber cores of the multi-core optical fiber and the passages of the second fan-in device;
The first fan-in device has an intermediate passage for connecting the pump light wave terminal and the acoustic-excited fiber core.

By providing an acoustic-excited fiber core in the center of the plurality of outer fiber cores that are annularly arranged, utilizing the FBS effect of the acoustic-excited fiber core to excite radial mode (*R*₀ₘ) sound waves that are circularly and symmetrically distributed and not sensitive to polarization in the multi-core optical fiber, filling the entire cross-section of the multi-core optical fiber with the *R*₀ₘ sound waves and extending *R*₀ₘ sound waves out of the cladding layer of the optical fiber, the multi-core optical fiber and the acousto-optic modulation device provided in the present application achieve simultaneous modulation on the numerous light-guiding fiber cores within the cladding layer. Moreover, since the *R*₀ₘ sound waves are circularly and symmetrically distributed, the modulation effect on the fiber cores will remain consistent, solving the problem of poor acousto-optic modulation effect of multi-core optical fibers in the prior art.

### Description of Drawings

In order to provide a clearer illustration of the technical solutions in the present application or prior art, the drawings required to be used for description of embodiments or prior art will be briefly introduced. Obviously, the drawings in the following description are some embodiments of the present application and those of ordinary skills in the art can obtain other drawings based on these drawings without expending creative work.
FIG. 1 is a schematic diagram of the cross-sectional structure of a multi-core optical fiber provided in an embodiment of the present application;
FIG. 2 is a schematic diagram of the relationship between FBS gain coefficient and effective mode field area at a wavelength of 1550 nm provided in an embodiment of the present application;
FIG. 3 is a schematic diagram of the structure of an acousto-optic modulation device provided in an embodiment of the present application;
FIG. 4 is a schematic diagram of frequency distribution of the *R*₀ₘ sound waves of the multi-core optical fiber provided in an embodiment of the present application.

### Embodiments

In order to make the objects, technical solutions, and advantages of the present application clearer, hereunder the technical solutions of the present application will be clearly and fully described in conjunction with the accompanying drawings. It is obvious that the embodiments as described are partial embodiments of the present application, not all embodiments. All other embodiments, obtained by those of ordinary skills in the art based on embodiments of the present application without expending creative work, all fall into the protection scope of the present application.

It should be understood that the terms "comprising" and "including" indicate the existence of features, steps, operations, elements, components, items, categories, and/or groups, but do not exclude the existence, appearance, or addition of one or more additional features, steps, operations, elements, components, items, categories, and/or groups.

As used herein, the terms "or" and "and/or" are interpreted as inclusive or imply any one or any combination. Therefore, "A, B, and/or C" imply any one of the following: A; B; C; A and B; A and C; B and C; A, B and C. Exceptions to this definition only occur when the combinations of elements, functions, steps, or operations are inherently mutually exclusive in certain ways.

With the rapid development of optical fiber communication technology, the multi-core optical fibers have shown great application potential in fields such as high-speed data communication and optical fiber ISAC system due to their unique transmission advantages.

Multi-core optical fibers can achieve parallel transmission in multiple spatial channels within a single optical fiber by enriching multiple light-guiding fiber cores in a common cladding layer of the optical fiber, significantly improve the transmission capacity of a single optical fiber, and have significant application prospects in the field of high-capacity optical fiber communication. In addition, optical fiber communication system and sensing systems have a high degree of commonality and compatibility in devices and transmission media. The technical advantages of multi-core optical fibers in the application filed of optical fiber sensing are gradually recognized by people, due to the unique structural characteristics of multi-core optical fibers. For example, by integrating various sensing methods (for such as optical time domain reflectometer of phase sensitive type, Raman optical time domain reflectometer, Brillouin optical time domain reflectometer) into different fiber cores of the same multi-core optical fiber, distributed sensing for various physical parameters (such as temperature, vibration, and strain) can be achieved, greatly expanding the sensing capabilities of multi-core optical fibers, which have significant application prospects in fields such as aerospace, deep-sea exploration, earthquake warning, and perimeter security.

The distributed optical fiber sensing system utilizes narrow pulsed light as detection light for sensing event localization and acoustic excitation. The generation of pulsed light relies on electro-optic modulation or acousto-optic modulation, in which the optical fiber electro-optic modulator is extremely sensitive to the light polarization state, and it is difficult for the extinction ratio of the modulated light pulse to exceed 40 dB, so the measurement accuracy and sensing distance of the sensing system are limited. However, the optical fiber acousto-optic modulator can generate light pulse with high extinction ratio of up to 50dB, and has better temperature stability, better light spot quality, lower cost, and obvious device advantages.

At present, optical fiber acousto-optic modulation device typically utilizes transducers to excite acousto-optic crystals to generate high-frequency sound waves, so as to achieve acousto-optic modulation. This method is limited by the low acoustic response frequency of acousto-optic crystals and it is difficult for the modulation bandwidth of the acousto-optic modulation device to exceed 400 MHz, limiting its application in fields such as high-speed data communication and optical fiber ISAC system. More importantly, for multi-core optical fiber transmission or sensing system, the structure of multi-core optical fibers typically includes a plurality of fiber cores and a common cladding region. Although each fiber core has independent transmission capability, only the acousto-optic modulation of a single fiber core can be achieved due to the limitations of existing acousto-optic modulation technology. In order to achieve the modulation of each fiber core in the multi-core optical fiber, plenty of acousto-optic modulators and fan-in fan-out (FIFO) devices are to be utilized, to equip each fiber core with an independent acousto-optic modulator and a FIFO device for individually modulating each fiber core.

Thus the multi-core optical fiber acousto-optic modulation has the following drawbacks. Firstly, since it is required to equip each fiber core with an independent acousto-optic modulator and a FIFO device, the structure of the multi-core optical fiber sensing system is complex and the hardware cost is high. Secondly, due to the performance differences of various modulators, there may be significant differences in modulation effects among different fiber cores, such as inconsistent parameters (such as modulation depth and extinction ratio), which will seriously affect the overall transmission performance of multi-core optical fibers. In addition, the existing acousto-optic modulation technology is limited by the acoustic response frequency of acousto-optic crystals, the modulation bandwidth is limited, and it is difficult to meet the needs of high speed and large capacity data transmission.

In view of the above problems, the present application provides a multi-core optical fiber and an acousto-optic modulation device. The multi-core optical fiber adopts a fiber core arrangement method that combines annularly arranged fiber cores and a central fiber core, the central fiber core is utilized to excite radial mode sound waves that are circularly and symmetrically distributed and not sensitive to the polarization, meanwhile the annularly arranged outer fiber cores are modulated so as to achieve simultaneous modulation on each fiber core in the multi-core optical fiber. Moreover, it has the characteristics of high bandwidth and high stability (consistent distribution of modulation effect) and thus meets the requirements for distributed optical fiber sensing of the multi-core optical fibers and high-capacity data transmission.

Hereunder the technical solutions of the present application will be explained in detail in specific embodiments. The following several embodiments may be mutually combined and the same or similar concepts or processes may not be repeated in some embodiments.

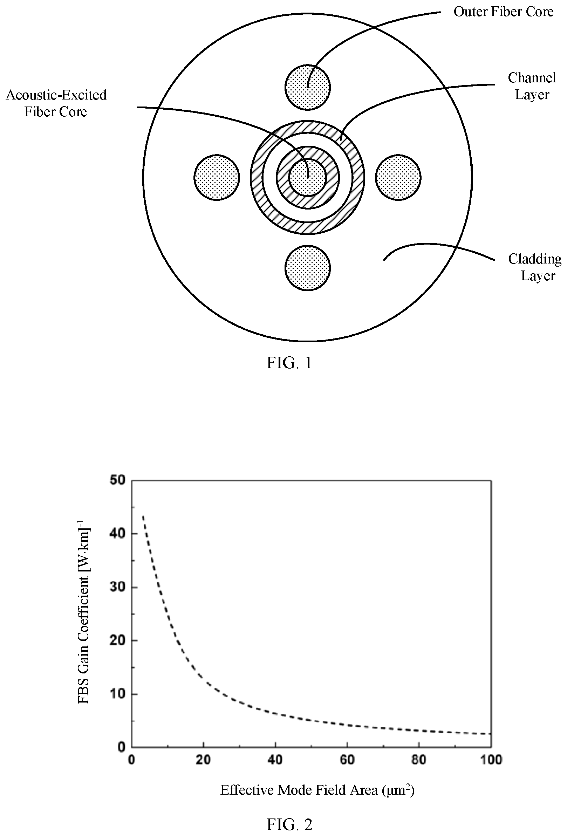

FIG. 1 shows a schematic diagram of the cross-sectional structure of a multi-core optical fiber provided in an embodiments of the present application. As shown in FIG. 1, the multi-core optical fiber in this embodiments comprises an acoustic-excited fiber core, a plurality of outer fiber cores, a channel layer, and a cladding layer.

Wherein, the acoustic-excited fiber core is located at the center of the cladding layer, and the cladding layer is configured to receive each fiber core and is made of silicon dioxide.

The acoustic-excited fiber core is equidistant from the plurality of outer fiber cores.

The channel layer is arranged on the outer side of the acoustic-excited fiber core; and the plurality of outer fiber cores have identical inter-core spacing therebetween and are annularly arranged about the acoustic-excited fiber core.

In this embodiment, the multi-core optical fiber adopts an arrangement method that combines annularly arranged fiber cores and a central fiber core. The arrangement of the annularly arranged fiber cores and the refractive index distribution of each core layer are consistent with the target multi-core optical fiber, in order to perform acousto-optic modulation on the target multi-core optical fiber.

The multi-core optical fiber in this embodiment utilizes Forward Brillouin Scattering (FBS) effect of the acoustic-excited fiber core to excite radial mode (*R*₀ₘ) sound waves that are circularly and symmetrically distributed and not sensitive to polarization in the multi-core optical fiber. The *R*₀ₘ sound waves will fill the cross-section of the entire multi-core optical fiber and extend out of the cladding layer of the optical fiber, so as to achieve simultaneous modulation on the numerous light-guiding fiber cores in the cladding layer. Since the *R*₀ₘ sound waves are circularly and symmetrically distributed, the modulation effect on each of the fiber cores will remain consistent. In addition, the resonant frequency of *R*₀ₘ sound waves has a low response to temperature, so the entire multi-core optical fiber used for acousto-optic modulation has a characteristic of temperature insensitivity.

In some embodiments, the channel layer is a double-layer channel layer.

With continued reference to FIG. 1, two channel layers are arranged at outer side of the acoustic-excited fiber core, and each channel layer has a refractive index depth in the range of -0.0045 to - 0.012. Each channel layer has identical width in the range of 10 to 20 µm. Deep refractive index channels can be achieved by doping germanium or boron elements into silicon dioxide. The arrangement of two channel layers can effectively constrain the optical field of the acoustic-excited fiber core, avoiding significant power crosstalk to the outer light-guiding fiber cores caused by leakage of the optical mode of the acoustic-excited fiber core, and the arrangement of two channel layers can suppress crosstalk below -70 dB/km.

In some embodiments, the acoustic-excited fiber core has a mode field area of a preset threshold, and the preset threshold ranges from ≥ 4 µm² to ≤ 40 µm².

Specifically, at a wavelength of 1,310 nm, the mode field area of the acoustic-excited fiber core is ≥ 4 µm² and ≤ 30 µm².

At a wavelength of 1,550 nm, the mode field area of the acoustic-excited fiber core is ≥ 5 µm² and ≤ 40 µm².

Optionally, at the wavelength of 1,310 nm, the mode field area of the acoustic-excited fiber core is ≥ 4 µm² and ≤ 11 µm².

In some embodiments, at the wavelength of 1,550 nm, the mode field area of the acoustic-excited fiber core is ≤ 15 µm².

Optionally, the mode field area of the acoustic-excited fiber core is greater than or equal to 5 µm².

In this embodiment, the outer diameter of the optical fiber may be 125 µm. The acoustic-excited fiber core adopts a small mode field area of 4-40 µm² to enhance the FBS effect and excite high-order *R*₀ₘ sound waves, thereby expanding the acousto-optic modulation bandwidth to above 1 GHz.

Specifically, FBS gain coefficient ${γ}_{OM}^{\left(m\right)}$ is used to describe the acousto-optic intensity of *R*₀ₘ sound waves and optical fields in the FBS effect, in unit of [W × km]⁻¹, and can be expressed as: ${γ}_{OM}^{\left(m\right)} = \frac{{k}_{0}}{4 {n}^{2} {cρ}_{0}} \frac{{Q}_{ES}^{\left(m\right)} {Q}_{PE}^{\left(m\right)}}{{Γ}_{m} {Ω}_{m}}$ where, *k*₀ is incident light wave number, *n* is the effective refractive index of the optical fiber, *c* is the speed of light in vacuum, and *ρ* is the density of the material of optical fiber; Ωₘ is the resonant angular frequency of *R*₀ₘ sound wave, and Γₘ is the linewidth of FBS scattering spectrum.${Q}_{ES}^{\left(m\right)}$ and ${Q}_{PE}^{\left(m\right)}$ are respectively electrostriction overlap integral and photoelastic overlap integral represented by the light wave electric field *E_{T}*(*r*) and sound field ${u}_{r}^{\left(m\right)} \left(r\right)$, which respectively determine the excitation efficiency of the *R*₀ₘ sound wave mode and the degree of acousto-optic modulation on the incident light wave, and are expressed as: ${Q}_{ES}^{\left(m\right)} ≡ \left({a}_{1}+4{a}_{2}\right) ⋅ 2 π {\int }_{0}^{a} {E}_{T} \left(r\right) \frac{{dE}_{T} \left(r\right)}{dr} {u}_{r}^{\left(m\right)} \left(r\right) rdr$ ${Q}_{PE}^{\left(m\right)} ≡ \left(\frac{{a}_{1}}{2}+{a}_{2}\right) ⋅ 2 π {\int }_{0}^{a} \left[\frac{{du}_{r}^{\left(m\right)} \left(r\right)}{dr}+\frac{{u}_{r}^{\left(m\right)} \left(r\right)}{r}\right] {\left|{E}_{T}\left(r\right)\right|}^{2} rdr$

Where, *a*₁=0.66, *a*₂= -1.2, and they are the photoelastic parameters of optical fiber made of silicon dioxide, *a* is the radius of multi-core optical fiber, and *r* is the component in the radius direction of optical fiber.

The light wave electric field *E_{T}*(*r*) in the optical fiber obeys a Gaussian function distribution and thus can be expressed as: ${E}_{T} \left(r\right) = {E}_{0} exp \left(-\frac{{r}^{2}}{{w}^{2}}\right)$ where, E₀ is the Gaussian peak intensity of light wave electric field, *w* is the effective radius of mode field, namely, the radius where the electric field intensity on the Gaussian axis drops to 1/e.

The effective mode field area (*A_{eff}*) of optical fiber is proportional to the mode field radius as follows: ${A}_{eff} = {πw}^{2}$

According to formulas (1) to (5), it can be seen that the FBS gain coefficient ${γ}_{OM}^{\left(m\right)}$ is directly related to the effective mode field area (*A_{eff}*), and the relationship thereof is shown in FIG. 2.

From FIG. 2, it can be seen that, at the wavelength of 1,550 nm, the mode field area of the acoustic-excited fiber core is 15 µm², and accordingly, the minimum value of the FBS gain coefficient is 16 [W × km]⁻¹, which is about 3 times that of the ordinary single-mode optical fiber, effectively enhancing the acousto-optic action effect. An acousto-optic modulation bandwidth of up to 1.485 GHz can be achieved by exciting different types of R₀ₘ sound wave modes.

In some embodiments, the number of outer fiber cores is 3, 4, 6, or 8.

That is to say, the multi-core optical fiber has 4, 5, 7 or 9 fiber cores in total.

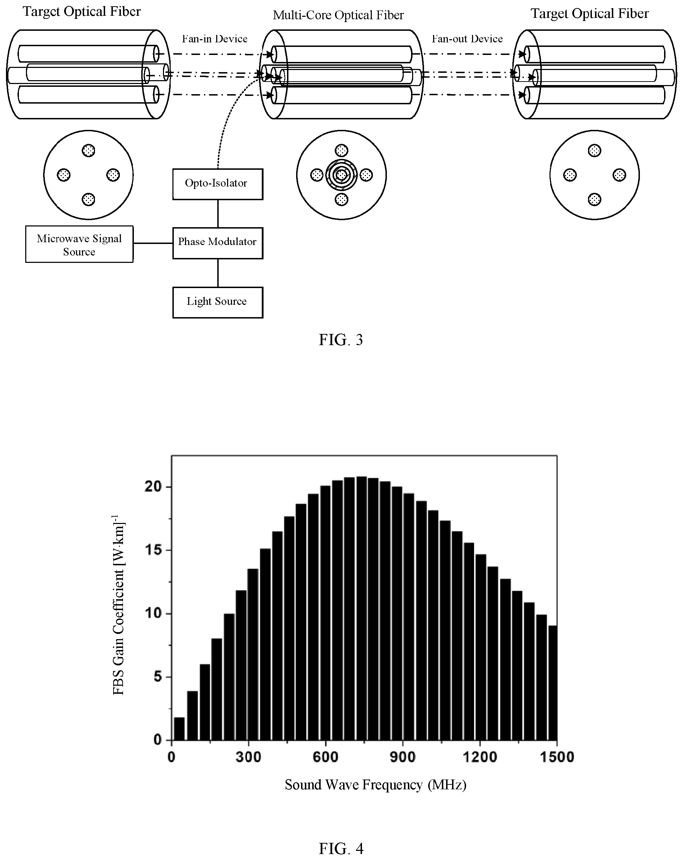

As shown in FIG. 3, the present application also provides an acousto-optic modulation device comprising the multi-core optical fiber according to the first aspect and any embodiments of the first aspect.

The multi-core optical fiber is used for acousto-optic modulation on a target optical fiber; wherein, the target optical fiber comprises a plurality of fiber cores and a cladding layer; the plurality of fiber cores of the target optical fiber are consistent in number and position arrangement with the plurality of outer optical fibers of the multi-core optical fiber, and there is no fiber core in the center position of the cladding layer of the target optical fiber.

In this embodiment, the arrangement and core number of the outer optical fibers of the multi-core optical fiber are consistent with those of the fiber cores of the target optical fiber for acousto-optic modulation, and the mode fields of corresponding fiber cores are matched with each other, to ensure that the light-guiding cores of the target optical fiber are effectively coupled with the light-guiding cores of the acousto-optic modulation multi-core optical fiber.

In some embodiments, the acousto-optic modulation device also comprises a fan-in device, a fan-out device, and a pump light wave terminal. Wherein, the fan-in device and the fan-out device are configured to connect the multi-core optical fiber with the target optical fiber; and the pump light wave terminal is connected to the acoustic-excited fiber core for emitting pump light towards the acoustic-excited fiber core.

In some embodiments, the pump light wave terminal is sequentially connected to a light source, a phase modulator, and an opto-isolator, the phase modulator is also connected to a microwave signal source and the opto-isolator is connected to the acoustic-excited fiber core.

Wherein, the center wavelength of the light source can be tuned within 1,310~1,550 nm. The microwave signal source is configured to generate a multi-wavelength pump light wave to excite *R*₀ₘ sound waves.

The opto-isolator is configured to isolate the backscattered light such as Rayleigh scattered light, Raman scattered light, and backward Brillouin scattered light, which is generated by the acoustic-excited fiber core, so that the phase modulator is protected.

In some embodiments, the fan-in device comprises a first fan-in device and a second fan-in device, and the fan-out device comprises a first fan-out device and a second fan-out device.

With reference to FIG. 3, the fan-in device in the figure is the first fan-in device, the fan-out device is the second fan-out device, and only outer passages of the second fan-out device are shown.

The passages of the first fan-out device and the passages of the second fan-in device are provided in correspondence to the plurality of fiber cores of the target optical fiber.

The passages of the first fan-in device and the passages of the second fan-out device are provided in correspondence to the fiber cores of the multi-core optical fiber. That is to say, the passages of the first fan-in device and the passages of the second fan-out device are consistent in number and distribution with the fiber cores of the multi-core optical fiber.

The first fan-out device is configured to receive an optical signal transmitted by the target optical fiber, and the optical signal is transmitted to the multi-core optical fiber through the first fan-in device; and the second fan-out device is configured to receive the optical signal acousto-optically modulated by the multi-core optical fiber, and the optical signal is transmitted to the target optical fiber through the second fan-in device.

In some embodiments, the first fan-in device has a plurality of outer passages for connecting the passages of the first fan-out device and the plurality of outer fiber cores of the multi-core optical fiber. The second fan-out device has a plurality of outer passages for connecting the plurality of outer fiber cores of the multi-core optical fiber and the passages of the second fan-in device. The first fan-in device has an intermediate passage for connecting the pump light wave terminal and the acoustic-excited fiber core.

In this embodiment, the passages of the fan-in device and the passages of the fan-out device do not interfere with each other and can individually transmit signals. There is no need to change the structures of the existing fan-in device and fan-out device, which can directly be adapted and used, saving the cost of acousto-optic modulation.

Taking an acousto-optic modulation multi-core optical fiber with five cores as an example, both the fan-in device and the fan-out device of the acousto-optic modulation multi-core optical fiber with five cores have five passages to realize the simultaneous acousto-optic modulation on the plurality of fiber cores of the target optical fiber, which is a four-core optical fiber. Both the fan-in device and the fan-out device of the target four-core optical fiber have four passages, which are correspondingly connected to the outer fiber cores of the acousto-optic modulation five-core optical fiber.

As shown in FIG. 3, the four passages of the fan-in device of the multi-core optical fiber are correspondingly connected to the four passages of the fan-out device (not shown in the figure) of the target optical fiber on the left side, and the intermediate passage of the fan-in device of the multi-core optical fiber is configured to connect the acoustic-excited fiber core and the pump light wave terminal.

The four passages of the fan-out device of the multi-core optical fiber are correspondingly connected to the four passages of the fan-in device (not shown in the figure) of the target optical fiber on the right side, to ensure normal transmission of the modulated optical wave signals in the multi-core optical fiber on the right side.

As the FBS process satisfies energy conservation and momentum conservation, when the frequencies of two light waves satisfy the FBS phase matching condition, that is, the frequency difference of the two light waves is *R*₀ₘ resonant frequency (*v*ₘ=Ωₘ/2π), *R*₀ₘ sound field will be excited in the acoustic-excited fiber core. Therefore, multi-wavelength light wave with a center frequency of *v*₀ is selected as the pump light wave for exciting *R*₀ₘ sound field, the center frequency corresponding to each wavelength component is *v*ᵢ *(i=-h,* ..., 0, ..., *h*, wherein *h* is a positive integer), and there are 2*h*+1 wavelengths. The frequency interval between two adjacent wavelength components is *vₘ*, meanwhile the center frequencies corresponding to 2*h*+1 wavelength components are respectively *v*₀-*hᵥₘ,* ..., *v*₀, *..., v*₀+*hᵥₘ.* The generation of the multi-wavelength pump light wave requires tuning output frequency of the microwave signal source to *vₘ*, loading the RF signal to the phase modulator, and then generating multi-wavelength light wave.

When two light beams with the same propagation direction and a frequency difference of forward sound field resonant frequency simultaneously enter the optical fiber, *R*₀ₘ sound waves will be excited inside the optical fiber according to the FBS phase matching condition, which is uniquely determined by the momentum conservation and the energy conservation. By changing density of optical fiber material, the excited *R*₀ₘ sound waves cause a periodic change of the distribution of the refractive index △n of optical fiber, and △n can be expressed as: $Δ n = {b}_{RI} cos \left(2{πν}_{m}t\right)$ where, *b_{RI}* is the change amplitude of refractive index, *vₘ* is the resonant frequency of the excited sound field, and *t* represents time.

The electric field in the target optical fiber of a single-frequency light wave that has not been modulated through the sound field is represented as: ${E}_{s _ tar} \left(z, t\right) = A exp \left[j\left(kz-{ω}_{0}t+{φ}_{0}\right)\right]$ where *A* represents the amplitude of electric field of the incident light wave, *φ*₀ is the initial phase, *j* is the imaginary unit, *z* represents position coordinate of light wave along the transmission direction of optical fiber, and *k* represents axial wave vector of the incident light wave.

Under the effect of acousto-optic modulation, the incident target-wavelength light wave will undergo phase shift △φ under the modulation of the excited *R*₀ₘ sound waves, and thus after modulation, the target-wavelength light wave's electric field can be expressed as: ${E}_{m _ tar} \left(z, t\right) = A exp \left[j\left(kz-{ω}_{0}t+{φ}_{0}+Δφ\right)\right]$ $Δ φ = \frac{2 π}{λ} {\int }_{0}^{l} Δ ndz$ where, *l* is the length of the optical fiber, and λ is the wavelength of the incident light wave.

Due to the acousto-optic modulation effect of *R*₀ₘ sound waves on light waves, the single-frequency target-wavelength light wave will become a multi-wavelength modulated light wave, the corresponding electric field can be expressed as: ${E}_{m _ tar} \left(z, t\right) = A exp \left[j\left(kz+{φ}_{0}\right)\right] ⋅ \left[{\sum }_{n = - ∞}^{∞} {j}^{n} {J}_{n} exp \left(-j\left({ω}_{0}-{nν}_{m}\right)t\right)\right]$ where, *Jₙ* is the n^{th}-order Bessel equation.

From formula (10), it can be seen that after acousto-optic modulation, the light wave in target optical fiber will have multiple frequency components in the frequency domain.

Based on the above understanding, the acousto-optic modulation multi-core optical fiber with five cores is continued to be taken as an example, the effective mode field area of the acoustic-excited fiber core is set to 10.5 µm, and the corresponding FBS gain coefficient is 20.8 [W × km]⁻¹. The frequency distribution of the *R*₀ₘ sound wave under the design of this acousto-optic modulation multi-core optical fiber is shown in FIG. 4.

When m is 16, there is a maximum acoustic intensity, and at this time, the *R*₀₁₆ sound wave frequency *ν₁₆* is738.8 MHz. If the frequency of the microwave signal source is set as 738.8 MHz, a multi-wavelength pump light with a frequency interval of 738.8 MHz will be generated.

When the multi-wavelength pump light enters the acoustic-excited fiber core, the acousto-optic modulation multi-core optical fiber where the acoustic-excited fiber core is located will be excited to generate depolarized *R*₀ₘ sound waves that are circularly and symmetrically distributed and not sensitive to polarization, and the *R*₀ₘ sound waves fill the cross-section of the cladding layer of the entire optical fiber and extend out of the cladding layer of optical fiber, to achieve simultaneous and uniform modulation on numerous light-guiding fiber cores in the cladding layer. Besides, the acousto-optic modulation effect of each fiber core is highly consistent and there is no inter-core difference in the modulation effect.

Predictably, if the frequency of the microwave signal source is set as 1.485 GHz, which corresponds to the resonant frequency of *R₀₃₂* sound waves, the modulation bandwidth of the entire acousto-optic modulation device comprising the multi-core optical fiber will be 1.485 GHz.

In addition, the linear correlation coefficient between the resonant frequencies of *R₀₃* sound wave to *R₀₂₉* sound wave and the external ambient temperature increases with the increase of m, ranging from approximately 18 kHz/°C to 169 kHz/°C. For example, the resonant frequency corresponding to *R₀₂₉* sound wave is 1.344 GHz. If the temperature changes by 1°C, the frequency of *R*₀₂₉ sound wave changes by only 0.169 MHz, which means that the temperature stability of the acousto-optic modulation bandwidth can reach 0.00125%.

In summary, by adding an acoustic-excited fiber core at the center of the structure, the multi-core optical fiber of the present application utilizes the FBS effect to excite depolarized (*R*₀ₘ) sound waves that are circularly and symmetrically distributed and not sensitive to polarization in the multi-core optical fiber, and the *R*₀ₘ sound waves fill the cross-section of the cladding layer of the entire optical fiber and extend out of the cladding layer of optical fiber to achieve simultaneous modulation on numerous light-guiding fiber cores in the cladding layer. The modulation effect on each fiber core is highly consistent and the whole acousto-optic modulation device has characteristic of polarization insensitivity. The acousto-optic modulation bandwidth can reach up to 1.485 GHz by utilizing *R*₀ₘ sound waves as the acousto-optic modulation sound field. By utilizing the characteristic that the resonant frequency of *R*₀ₘ sound waves is not sensitive to temperature, the temperature stability of the acousto-optic modulation bandwidth can reach 0.00125%, which has strong environmental adaptability.

The acousto-optic modulation device of this application can achieve simultaneous acousto-optic modulation of each fiber core of the multi-core optical fiber by only using two pairs of fan-in device and fan-out device, effectively saving cost and complexity of the device.

Finally, it should be noted that the above embodiments are simply used to illustrate the technical solution of the present application, rather than limit the present application. Although the present application has been described in detail with reference to the aforementioned examples, those of ordinary skills in the art should understand that they can still modify the technical solutions recorded in the aforementioned examples, or make equivalent replacements to some or all technical features of the aforementioned examples. And these modifications or replacements do not make the essence of the corresponding technical solutions depart from the scope of the technical solutions of the various examples of the present application.

## Claims

1. A multi-core optical fiber, **characterized in that** the multi-core optical fiber comprises an acoustic-excited fiber core, a plurality of outer fiber cores, a channel layer, and a cladding layer;
the acoustic-excited fiber core is located at the center of the cladding layer, and the acoustic-excited fiber core is equidistant from the plurality of outer fiber cores;
the channel layer is arranged on the outer side of the acoustic-excited fiber core;
the plurality of outer fiber cores have identical inter-core spacing therebetween and are annularly arranged about the acoustic-excited fiber core.

2. The multi-core optical fiber according to claim 1, **characterized in that** the acoustic-excited fiber core has a mode field area of a preset threshold, and the preset threshold ranges from ≥ 4 µm² to ≤ 40 µm².

3. The multi-core optical fiber according to claim 1, **characterized in that** the channel layer is a double-layer channel layer.

4. The multi-core optical fiber according to claim 2, **characterized in that** the mode field area of the acoustic-excited fiber core is less than or equal to 15µm² at a wavelength of 1,550nm .

5. The multi-core optical fiber according to claim 4, **characterized in that** the mode field area of the acoustic-excited fiber core is greater than or equal to 5 µm².

6. The multi-core optical fiber according to any one of claims 1-5, **characterized in that** the number of outer fiber cores is 3, 4, 6, or 8.

7. An acousto-optic modulation device, **characterized in that** the device comprises multi-core optical fiber of any one of claims 1-6;
the multi-core optical fiber is used for acousto-optic modulation on a target optical fiber;
the target optical fiber comprises a plurality of fiber cores and a cladding layer;
the plurality of fiber cores of the target optical fiber is consistent in number and position arrangement with the plurality of outer fiber cores of the multi-core optical fiber, and there is no fiber core in the center of the cladding layer of the target optical fiber.

8. The acousto-optic modulation device according to claim 7, **characterized in that** the device also comprises: a fan-in device, a fan-out device, and a pump light wave terminal;
the fan-in device and the fan-out device are configured to connect the multi-core optical fiber with the target optical fiber;
the pump light wave terminal is connected to the acoustic-excited fiber core for emitting pump light towards the acoustic-excited fiber core.

9. The acousto-optic modulation device according to claim 8, **characterized in that** the pump light wave terminal is sequentially connected to a light source, a phase modulator, and an opto-isolator, the phase modulator is also connected to a microwave signal source and the opto-isolator is connected to the acoustic-excited fiber core.

10. The acousto-optic modulation device according to claim 8, **characterized in that** the fan-in device comprises a first fan-in device and a second fan-in device, and the fan-out device comprises a first fan-out device and a second fan-out device;
both the passages of the first fan-out device and the passages of the second fan-in device are arranged in correspondence to the plurality of fiber cores of the target optical fiber;
both the passages of the first fan-in device and the passages of the second fan-out device are arranged in correspondence to fiber cores of the multi-core optical fiber;
the first fan-out device is configured to receive an optical signal transmitted by the target optical fiber, and the optical signal is transmitted to the multi-core optical fiber through the first fan-in device;
the second fan-out device is configured to receive the optical signal modulated by the multi-core optical fiber, and the modulated optical signal is transmitted to the target optical fiber through the second fan-in device.

11. The acousto-optic modulation device according to claim 10, **characterized in that**,
the first fan-in device has a plurality of outer passages for connecting the passages of the first fan-out device and the plurality of outer fiber cores of the multi-core optical fiber;
the second fan-out device has a plurality of outer passages for connecting the plurality of outer fiber cores of the multi-core optical fiber and the passages of the second fan-in device;
the first fan-in device has an intermediate passage for connecting the pump light wave terminal and the acoustic-excited fiber core.
